# EUROPEAN PATENT APPLICATION

(11) **EP 4 052 836 A1**
(43) Date of publication of application: **07.09.2022**
(21) Application number: 21160862.5
(22) Date of filing: 05.03.2021
(51) Int. Cl.: B23K 26/12, B23K 26/082, B23K 26/142, B23K 26/21, B23K 26/36, B23K 101/38

(54) **METHOD FOR LASER WELDING AND LASER WELDING SYSTEM**

(71) Applicant: IPTE Factory Automation NV, 3600 Genk (BE)
(72) Inventor: GIESGEN, Ingolf, 3600 Genk (BE)
(74) Representative: Jostarndt Patentanwalts-AG

(57) **Abstract**

The invention relates to a method for producing a material composite by means of laser welding, in which a laser unit emits laser radiation onto a partial region of a processing surface of at least one of at least two components to be joined by welding, a component melts in an incident region of the laser radiation at least in regions for the purpose of joining the components, and at least one vacuum chamber (0250) is connected pressure-tight in a suction process to the processing surface which encloses the partial region on which at least one welding operation is carried out by means of the laser.

According to the invention this method is characterized in that a plurality of processing surfaces are each connected to individual vacuum chambers, in that the vacuum chambers (0250) are connected pressure-tight to a vacuum or a vacuum cleaning unit for the suction process and in order to reduce the pressure in the vacuum chambers (0250), and in that, when the pressure falls below a predefined pressure value for the welding process, a laser beam with a power sufficient for the welding process is coupled into one vacuum chamber (0250) after another and onto the partial regions of the welded joints to be produced.

The use of a local vacuum chamber prevents also the contamination of areas located outside the vacuum chambers and eliminates the possibility of electrical short circuits.

Furthermore, the invention relates to a system for carrying out the method and a use of this system

## Description

The present invention relates to production of material composites by means of a laser welding method. The invention further relates to a system for laser welding a workpiece and a vacuum chamber to be used therein.

When thermally machining a metal workpiece, for example welding, it is important to keep oxygen away from the machining area. During thermal processing, the processing site is usually heated strongly, which greatly increases the oxidation tendency of the material. In welding, welding under shielding gas is therefore known, whereby the oxygen-containing atmosphere at the processing point is temporarily replaced by an oxygen-free shielding gas. Since the shielding gas in a free atmosphere is quickly replaced by the normal, oxygen-containing air, oxygen can still reach the strongly heated processing point of the workpiece, so that oxidation of the material cannot be ruled out. Therefore the environment of the welding area is normally flooded by an overpressure of inert gas which is sucked away at the outer environment. Another possibility would be to place the workpiece in a chamber that can be flooded with an inert gas. However, the disadvantage here is that the atmosphere in the chamber must be replaced, i.e. the chamber must first be evacuated before the protective gas can be introduced. If the chamber is evacuated, however, flooding with a protective gas can be dispensed with, since there is also no oxygen present in the vacuum. It is advantageous to carry out workpiece processing in the chamber by laser beams, as these can be easily coupled into the chamber. In an evacuated vacuum chamber, gaseous, liquid or solid substances with a high temperature can be released from a workpiece due to chemical, physical or mechanical processes, in particular due to the processing of the object by means of electromagnetic radiation. These can emerge from the workpiece, for example, as atoms, molecules or particles, in the form of steam or as plasma. As a result of the low pressure prevailing in the vacuum chamber, which is required for processing, the emitted substances have only a small number of interaction partners available to which they can transfer their energy. Consequently, they reach all accessible surfaces almost unhindered and are deposited on them. The quality of a weld made in a vacuum increases with the degree of absence of oxygen.

In addition, any gas bubbles inside a weld joint will be sucked out by the vacuum which decreases a voiding inside the joint and increases the welding quality in addition.

Laser welding offers a lot of advantages compared to conventional welding methods, particularly in the production process of batteries and fuel cells for the automotive industry. These advantages are for example the easy and efficient heat transfer onto the surfaces of the to be welded components and the reduced mechanical stress for the components, which both contribute to a more reliable and longer lasting connection and/or material composite.

The production processes of electrical high-performance components, such as batteries and fuel cells, especially those that are to be used in cars, are laborious and expensive. It is therefore the object of the present invention to provide a method to form welded high current joints of high quality in a short amount of time with high efficiency. Furthermore, it is also the task of the invention to provide a system to carry out such a method and to disclose a vacuum chamber needed to operate such a system.

According to the invention, the first problem is solved with the method with the features of claim 1. Advantageous embodiments of the method result from sub claims 2-7. The second task is solved by a system of the independent claim 8. Advantageous embodiments are provided with the sub claims 9-15.

The provided method for producing material composites by means of laser welding uses vacuum chambers that are connected pressure-tight to the surface surrounding/enclosing the partial region on which at least one welding operation is carried out. It is preferred to have a plurality of vacuum chambers that can be on different surfaces within a predefined region so that the laser unit is able to couple its laser radiation into each of the vacuum chambers without having to move the laser unit or the material composite.

The laser unit is especially a continuous wave (CW) solid state laser.

It is especially advantageous to adapt the vacuum chamber design to the welding joint to be created. By adaptation of the vacuum chamber design onto the welding joint to be created all desired welding geometries can be realized, for example a small vacuum chamber for a single laser welding spot or a long vacuum chamber for a linear welding joint especially in a 90 degree corner or on a flat surface. By usage of a 3D vacuum chamber and the installation of the galvanometer onto a robot system all welding joints on a 3D product can be realized.

The vacuum chambers are connected pressure-tight, e.g. via a valve, to a vacuum and/or a vacuum cleaning unit. This vacuum can be created with a vacuum pump directly connected pressure-tight to the vacuum chambers. It is also possible for the vacuum to be a large vacuum reservoir that is significantly larger in volume than the individual vacuum chambers, preferably at least 100 times the size of the vacuum chambers. The vacuum can also be used as cleaning unit by adding a filter system between pump and vacuum chamber to suck a big amount of air and particles that are on the surface out of the vacuum chamber in a short time. When the pressure in the chamber falls below a predefined value, a laser beam with sufficient power to melt the materials at least in parts is coupled into each vacuum chamber one after the other and onto the regions of the welded joints to be produced. The welding process itself can be done in a short time, e.g. 150ms. This small time interval that the laser is turned on, for example wobbled and the reduced boiling temperature of the material due to the lowered pressure in the vacuum chamber that enables the laser to be operated in an operating point with smaller output power both contribute to a reduction of power consumption.

According to an advantageous embodiment of the invention the processing surface is cleaned with the aid of a laser unit and the vacuum cleaner. The materials to be welded can often be greasy and dirty from earlier processing steps. These undesired materials on the surface soot the vacuum chamber and the surface itself when they are heated up by the laser radiation during the welding step and can greatly influence the quality of the welded joint in a negative way. Cleaning the processing surfaces prior to bringing them into pressure-tight connection with the vacuum chambers benefits not only the resulting connection, but also enhances the amount of times the vacuum chambers can be used.

In a preferred embodiment the laser unit can be used during the cleaning step to pre-structure the processing surface to remove impurities and imperfections from the material.

According to an advantageous embodiment of the invention a plurality of processing surfaces are cleaned in one step. The pre-structuring of the multiple processing surfaces can also take place during this cleaning step. This further optimizes the method and ensures a high quality of the later welded joints. For this cleaning and/or pre-structuring process, either the CW welding laser or a pulsed high energy cleaning laser can be used.

It has been found to be advantageous if the vacuum cleaning unit and/or the vacuum are brought into pressure-tight connection with the vacuum chamber in such a way that in a first operating function of the vacuum chamber air is sucked out of the chambers.

According to a preferred embodiment air flows into the vacuum chamber through a defined leakage and a volume flow is generated. Any impurities and particles that arise during the welding process are thus removed from the processing region and sucked out of the vacuum chamber so that they can no longer negatively influence the quality of the welded connection. Also, the longevity of the vacuum chambers is increased since nearly all of the sputtered material is sucked out of the chambers.

Furthermore it has been proven to be advantageous if the method comprises a blow-off step in which after the laser operation has concluded the vacuum chamber is brought into pressure-tight connection with a compressed air tank for a short impulse time of a few ms with the aid of a valve, e.g. a solenoid valve. The pressure inside the vacuum chamber is thus matched to the external air pressure surrounding the vacuum chamber. This allows the user to lift the vacuum chamber off the newly formed material composite without causing any damage to the vacuum chamber or the connection points. After lifting the vacuum chamber from the surface the suction unit continues to remove any residues generated during the laser process.

According to a very preferred embodiment the method is used for high-volume production of high-current contacts by means of vacuum laser welding in a process line for the production of electrical high-performance components. Such a method would be characterized in that a frame, in which a plurality of vacuum chambers are located at predefined positions, is used to speed up the processing step, while creating stable and reliable electrical contacts of high quality.

A system according to the invention for laser welding with a laser unit which is designed in such a way that it can emit laser radiation and project the laser beam onto a partial region of a processing surface is characterized in that the system contains a plurality of vacuum chambers. These vacuum chambers each have a sealing body, a supply line with at least one connection to a vacuum reservoir, a high temperature pressure insert, and a coupling window that should be turned towards the laser unit, which covers and seals the vacuum chamber. Here and in the following, the term window is understood to mean an area in the wall of the vacuum chamber that is transparent for the radiation, i.e. is open to the radiation with as little loss as possible. For electromagnetic radiation emitted by the laser unit, this depends on the wavelength of the electromagnetic radiation. The window can have a windowpane made of a high transparent material, e.g. quartz glass, sapphire glass that can be coated with an anti-reflective material, such as BaSO₄, to increase the transmission rate, and can be circular in shape, for example. Such windowpanes have discrete transmission properties that must not be altered to ensure consistent processing conditions. If metal is deposited on the accessible surface of the window, for example as a result of machining of a metallic workpiece taking place in the vacuum chamber, the transmissivity of the window will decrease. This can lead to the window becoming unusable and having to be cleaned or even replaced.

According to an advantageous embodiment of the system, the vacuum chambers can have two operating functions, such that in a first operating function the vacuum chamber is moved onto the welding location and not connected pressure-tight to a vacuum cleaning unit and in a second operating function the vacuum chamber is connected pressure-tight to the vacuum reservoir. As described before, the vacuum cleaning unit is characterized in that it has the ability to suck a comparably large volume of air and particles out of the vacuum chamber in a short amount of time. The evacuation process of this system is thus sped up by first operating the vacuum chamber in its first operating function to quickly remove the particles and lower the pressure to a certain value before reaching the second operating function to further reduce the pressure inside the chamber.

In a further advantageous embodiment of the system the vacuum chamber's sealing body and high temperature pressure insert are of different degrees of hardness, wherein the high temperature pressure insert is made out of a material with a higher degree of hardness than that of the sealing body. This way, when the vacuum chambers are brought into contact with the processing surface and the suction operation starts, the sealing body elastically gives in and allows the high temperature pressure insert to put pressure onto the surface and act mechanically on the materials so as to bring them more into contact with each other. This also produces a direct thermal connection between the materials.

As stated before, a situation might arise in which the coupling window of the vacuum chamber is unusable or even broken. In order to increase the longevity and the lifespan of each vacuum chamber, according to a further advantageous embodiment the coupling windows can be removably recessed in the vacuum chamber in such a way that they can be withdrawn from a slot recessed in the side of the housing for replacement. Therefore, the glass pane of each vacuum chamber can easily be pulled out of its vacuum chamber and be replaced by another glass pane or cleaned. The window can be placed on a window holder. To easily withdraw the window or the window holder, the window holder or the window can have a handle that sticks out of the slot through which it can be pulled out. But it could also be removable with the help of a lever or a switch. It is also possible to have the window holder connected to the rest of the vacuum chamber with the aid of a hinge on one side and an edge of the vacuum chamber that sticks out and keeps the window holder in place and holds the window holder down and thus holds the vacuum chamber shut from the other side. In order to replace the window in this configuration, the clips mechanism can be pulled back elastically, and the window holder can pop out so that the window can be exchanged without touching the coated glass surface.

According to a preferred embodiment the laser unit of the system is equipped with a galvanometer mirror arrangement to be able to steer the laser beam into each vacuum chamber in its laser spot area. The laser unit can further have an optical collimation device, such as a lens, to shift the focal point of the laser beam and adjust it to the height of each processing surface the vacuum chambers are placed on. The laser unit can further have a so-called wobble head that allows different welding patterns to be applied.

It has been found to be advantageous if a plurality of vacuum chambers are located at predefined positions inside a frame and the laser couples its laser beam into a plurality of chambers within the frame one by one. This allows the system to be used in assembly-line production, as a product, of which the to be welded regions are known, can be brought to a predefined position inside the laser spot area, so that the frame with the vacuum chambers can be applied to the product and the vacuum chambers are brought into contact with the product in one step.

The use of such a system has been proven to be beneficial in high-volume production of high-current contacts by means of vacuum laser welding in a process line for manufacturing electrical high-performance components, such as batteries and fuel cells for the automotive industry, especially because this vacuum chamber system prevents the contamination of areas located outside the vacuum chambers.

According to a very preferred embodiment such a system is used in a method for producing material composites by means of laser welding, in particular in a method for producing electrical contacts of a battery or a fuel cell or for connecting elements of a battery or fuel cell where the product that the frame is applied to is a battery or a fuel cell and the vacuum chambers are provided at positions for producing the electrical contacts by welding connections of components of the battery or the fuel cell and/or at positions for welding connections of elements of the battery or the fuel cell.

Further advantages, special features and expedient further embodiments of the invention can be seen from the sub claims and the following illustration of preferred embodiments based on the figures.

From the illustrations shows:
- Fig. 1: a schematic overview of a laser welding system according to the invention
- Fig. 2: a more precise 3D overview of the system's main components

- Fig. 3a: a vacuum chamber according to the invention from a top-view perspective
- Fig. 3b: the vacuum chamber from a side-view perspective
- Fig. 3c: the vacuum chamber cut along the A-A axis from a side-view perspective
- Fig. 3d: the vacuum chamber in a 3D perspective where one part is semitransparent
- Fig. 4a: the sealing body of the vacuum chamber from a top-view perspective
- Fig. 4b: the sealing body cut along the A-A axis from a side-view perspective
- Fig. 4c: the sealing body in a 3D perspective
- Fig. 5: an exemplary product with applied vacuum chambers

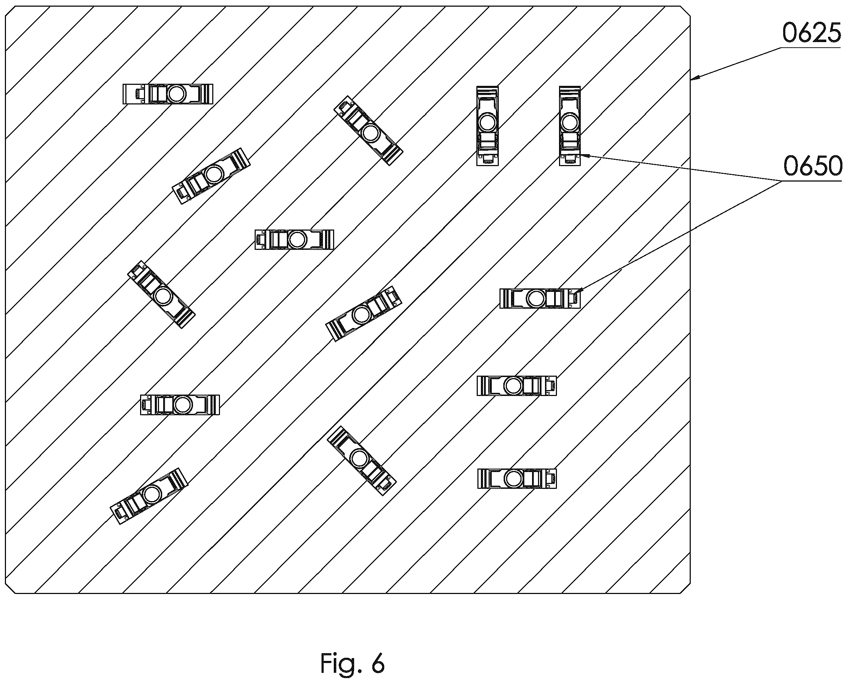

- Fig. 6: a frame with multiple vacuum chambers according to the invention
- Fig. 7: a product with vacuum chambers in a side-view perspective
- Fig. 8a: a schematic overview of a laser welding system with a vacuum cleaning unit according to the invention
- Fig. 8b: the system with the vacuum cleaning unit in a top-view perspective
- Fig. 8c: a 3D perspective of the system with the vacuum cleaning unit

The figures show components of a system according to the invention.

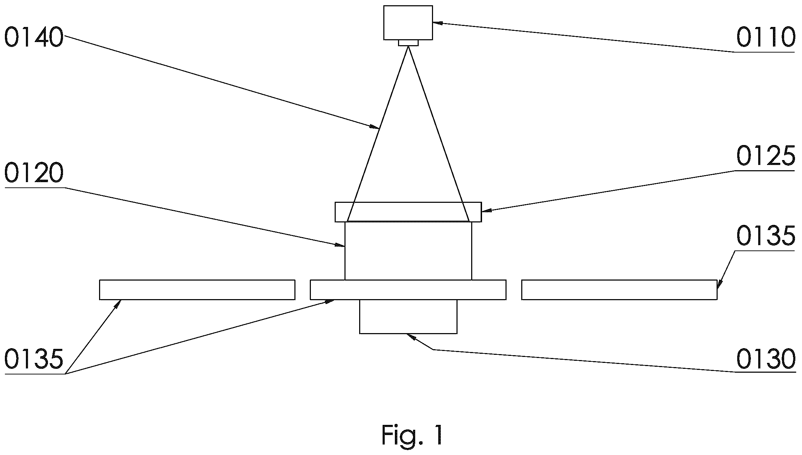

Fig. 1 shows a schematic overview of a laser welding system according to the invention, in which a laser unit 0110 is able to emit laser radiation within a laser spot area 0140. A vacuum chamber frame 0125 or a at least a part of the vacuum chamber frame is located in this laser spot area 0140, so that not here shown vacuum chambers inside the vacuum chamber frame 0125 can be reached by the laser unit 0110. A product 0120 that the vacuum chamber frame 0125 is to be applied to, lays on a transport segment 0135, such as a conveyor belt, and is brought with the help of a product lift 0130 to a convenient position where at least parts of the product 0120 can be reached by the laser radiation of the laser unit 0110.

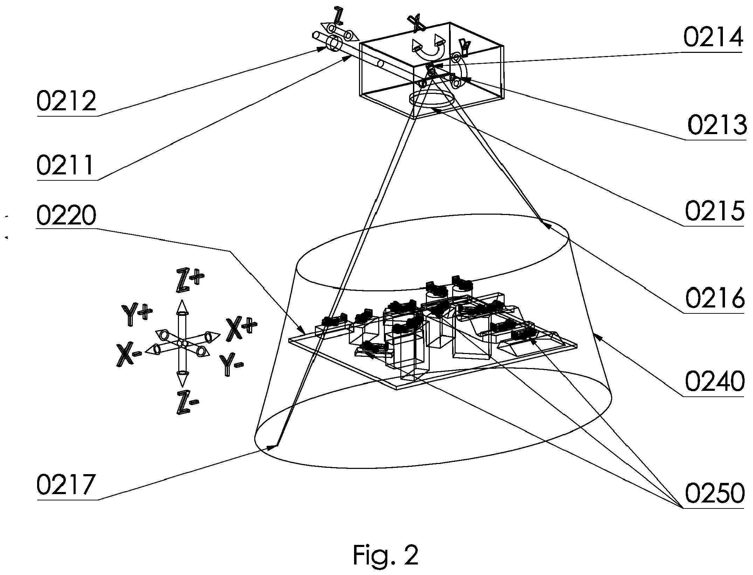

Fig. 2 shows a more precise 3D overview of the system's main components. The laser unit has a transparent housing to schematically show its built-in components. For simplicity reasons it is not shown how the laser beam 0211 is created. The laser beam 0211 can be emitted from a gas-laser, such as a CO₂ laser, a solid state laser, such as a YAG-laser, or a semiconductor-laser and can be guided with the aid of a waveguide and/or optical components to the laser unit. The laser beam 0211 is then guided towards a target location within its laser spot area 0240. The direction in which the laser beam 0211 exits the laser unit can be altered with the help of a galvanometer mirror for laser spot x-position 0214 and y-position 0213 adaptation. To adjust the focal point of the laser beam 0211 to the height of each vacuum chamber 0250 within the frame, a lens for laser spot z-position adaptation 0212 is used. The whole range that can be detected by the laser beam 0211 is marked as the laser spot area 0240. The vacuum chambers 0250 are located on components of one product 0220 or multiple products 0220 and are distributed over a range of heights and positions within the laser spot area 0240. An exemplary first laser spot 0216 with a first set of coordinates and a second laser spot 0217 with a second set of coordinates, different from the first set of coordinates, is shown. It is beneficial if the positions of the vacuum chambers 0250 are known to the laser controlling unit, so when the vacuum chambers 0250 are brought into contact with the surfaces of the product 0220 at predefined positions, the laser unit can couple its laser beam 0211 into each vacuum chamber 0250 in a short time. To increase efficiency in the laser usage and throughput multiple vacuum chambers on in minimum one product or on minimum one vacuum chamber on multiple products in a tray can be welded in the same setup.

The galvanometer preferably contains a protective glass 0215, e.g. a glass plate to protect the inside of the galvanometer.

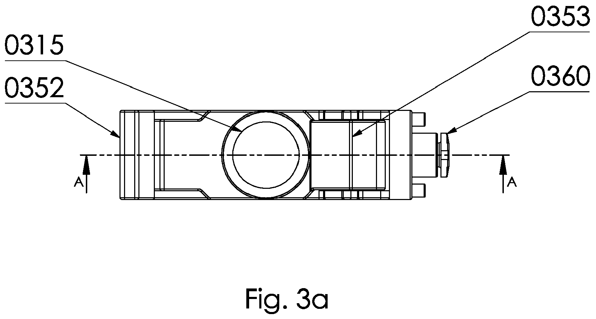

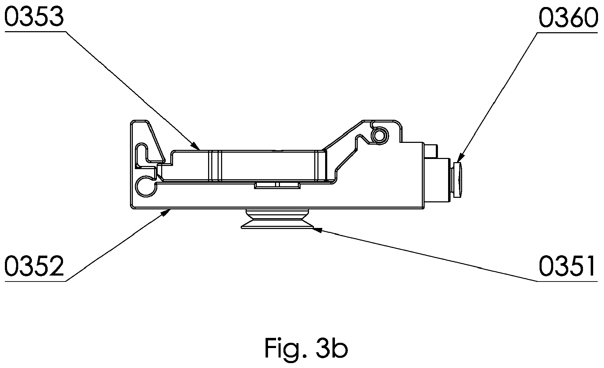

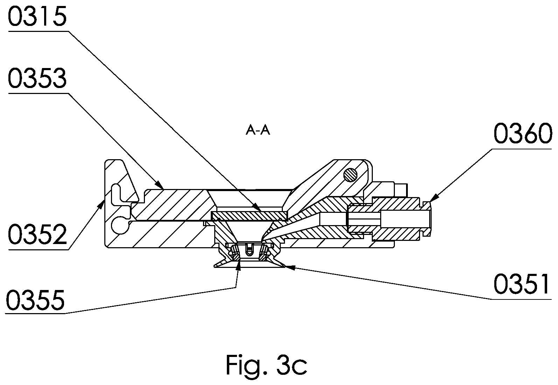

Fig. 3a to Fig. 3d show different aspects of an exemplary vacuum chamber 0350 to be used in a system according to the invention. Such a vacuum chamber 0350 can be small in size so the volume that is to be evacuated is also small and the chamber is evacuated quickly. Fig. 3a shows the vacuum chamber 0350 from a top-view perspective. It has a vacuum chamber window 0315 that is circular in shape and can be made out of quartz glass or sapphire glass and can have a coating to increase the transmissivity of the desired wavelength, which is equal to the wavelength of the laser radiation that the laser unit emits. The vacuum chamber window 0315 is placed in a vacuum chamber window holder 0353 that can be removable connected to the vacuum chamber 0350. The vacuum chamber window holder 0353 in Fig. 3a to Fig. 3d is connected on one side with the aid of a hinge to the vacuum chamber body 0352 and on the other side to an edge of the vacuum chamber body 0352. To replace the vacuum chamber window 0315 of the vacuum chamber 0350 shown in Fig. 3a to 3d, a user could open the integrated clips mechanism, so the vacuum chamber window holder 0353 pops out. The vacuum chamber window 0315 can then be easily withdrawn and replaced. A silicone sealing 0351 of the vacuum chamber 0350 is shown in the side-view of the vacuum chamber 0350 in Fig. 3b and is used to form the pressure-tight connection with a processing surface. This can be done with the aid of a vacuum reservoir or a vacuum cleaning unit that is connected pressure-tight to the vacuum chamber 0350 via a vacuum connection 0360.

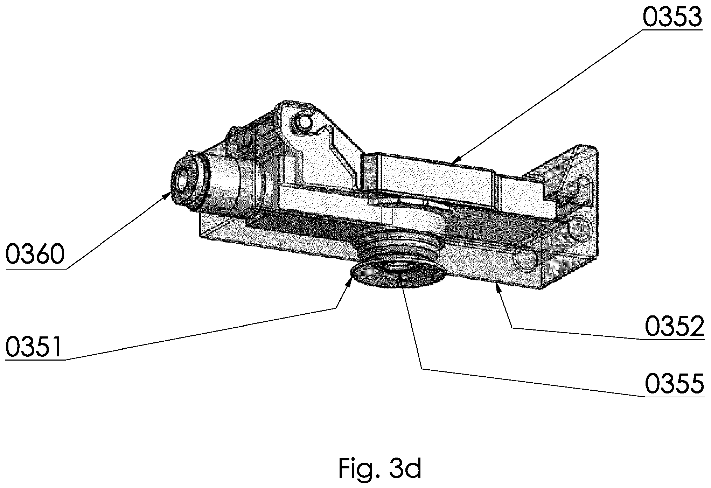

To form the pressure-tight connection the silicone sealing 0351 in combination with a high temperature pressure insert 0355 is used. The high temperature pressure insert 0355 is made out of a material with a higher degree of hardness than that of the silicone sealing body 0351, so that when a suction operation takes place with the aid of the vacuum through the vacuum connection 0360 and the pressure insight the chamber is lowered, the vacuum chamber 0350 sucks itself onto the processing surface and the silicone body 0351 gives in and is elastically deformed and the high temperature pressure insert 0355 is brought into contact with the processing surface in such a way that it applies a force to the processing surface to bring the materials to be welded more into contact with each other and thus amplify a thermal connection between the materials. Fig. 3d shows the vacuum chamber 0350 with a semitransparent body.

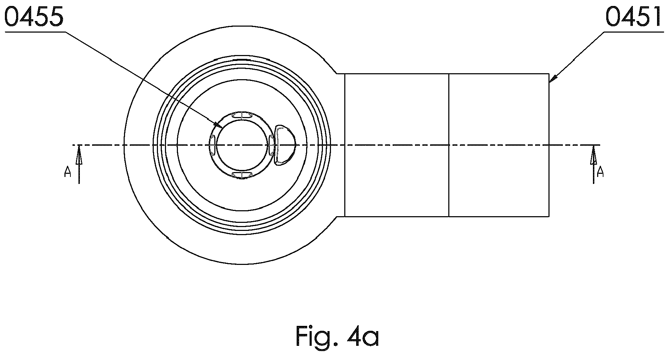

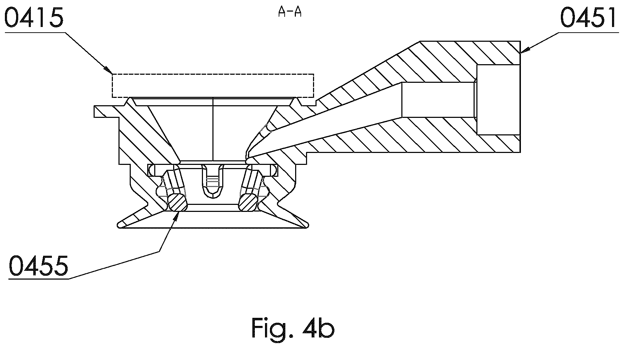

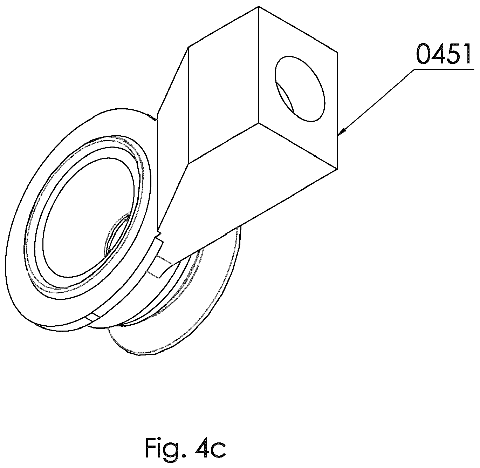

Fig. 4a, Fig. 4b and Fig. 4c further show the sealing body of the vacuum chamber 0350, 0450 from Fig. 3a to Fig. 3d in detail. The silicone sealing 0451 has a high temperature pressure insert 0455 and the vacuum chamber window 0451 seals the vacuum chamber 0450 inside a vacuum chamber. This further emphasizes the small size of the volume that needs to be evacuated.

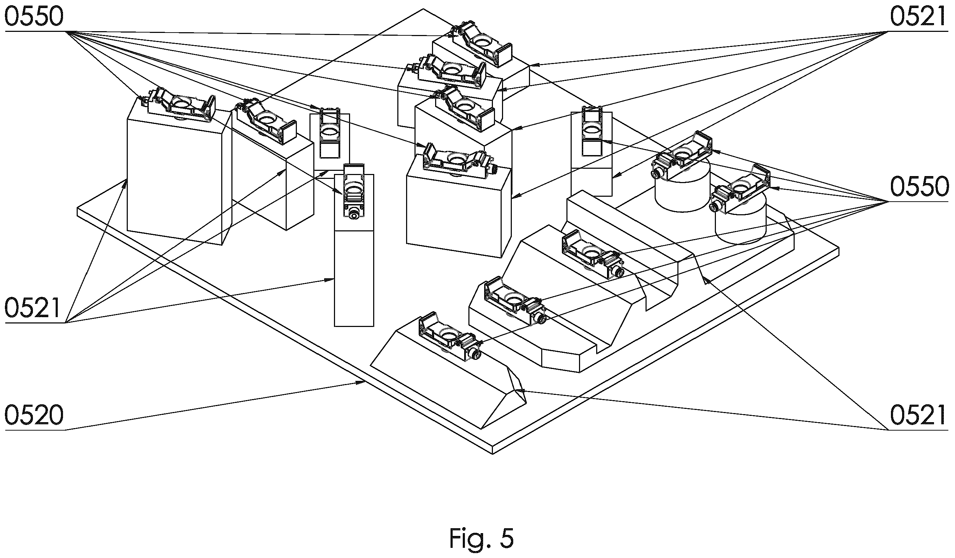

An exemplary product 0520 with vacuum chambers 0550 is displayed in Fig. 5. The components on the product 0520 each have their own vacuum chamber 0550 for one or multiple welding joints that is pressure-tight connected to it. The tubes that connect the vacuum chambers 0550 to the vacuum reservoir or the vacuum cleaning unit are not shown here. In the exemplary product 0520 only one vacuum chamber 0550 per surface is shown but it is also possible to have multiple vacuum chambers 0550 on one bigger surface.

The product 0520 comprises several product elements 0521 each of which contains a processing surface of at least one of at least two components to be joined by welding.

If the positions of the components of the product are known beforehand, as is usually the case in high volume production, the vacuum chambers 0650 can be placed at fixed positions in a vacuum chamber frame 0625. So, if a product is ready to be welded, the vacuum chamber frame 0625 can be applied to it and the vacuum chambers 0650 are each connected to the product surfaces in one step. The vacuum chamber frame is equipped with single pressure connectors and electrical connectors. This allows to decouple the frame from the vacuum and/or the electrical power unit and to replace one vacuum chamber frame by another vacuum chamber frame for treating subsequent product. During this product positioning time the laser can be used to execute the surface cleaning of the welding joint partner. This increases the laser usage time drastically.

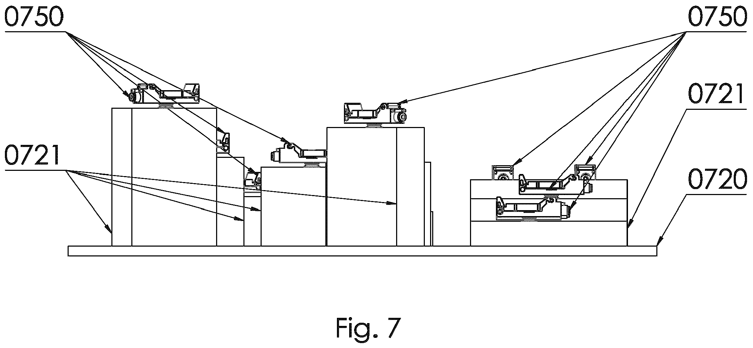

Fig. 7 further shows a side-view of the exemplary product 0720 with applied vacuum chambers 0750. It is shown that the vacuum chambers 0750 are not only distributed over the whole area of the product 0720, but the processing surfaces are also at different heights.

The product 0720 comprises several product elements 0721 each of which contains a processing surface of at least one of at least two components to be joined by welding.

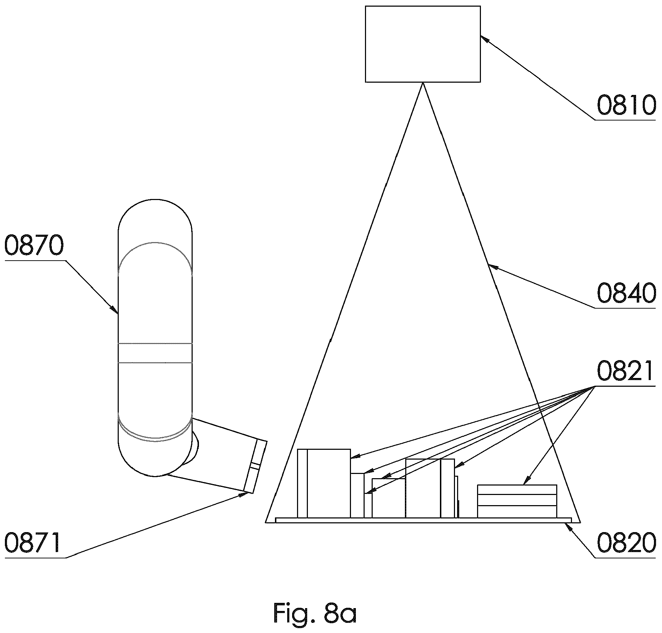

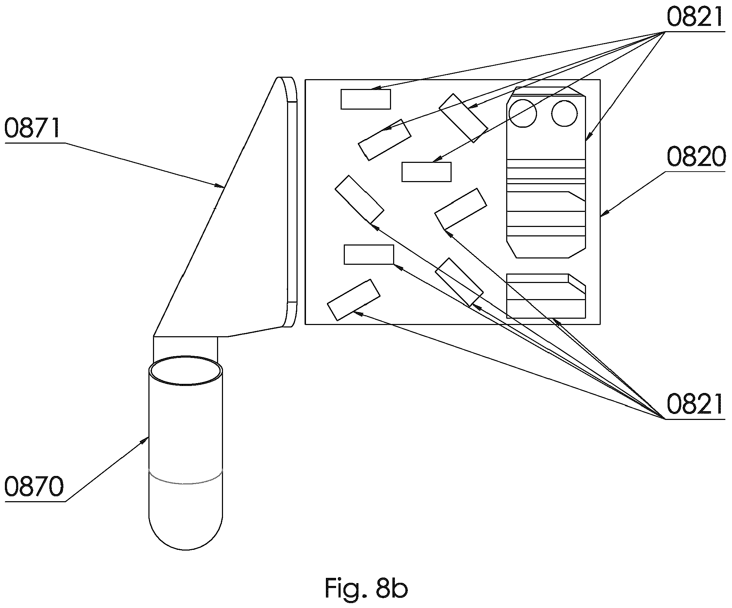

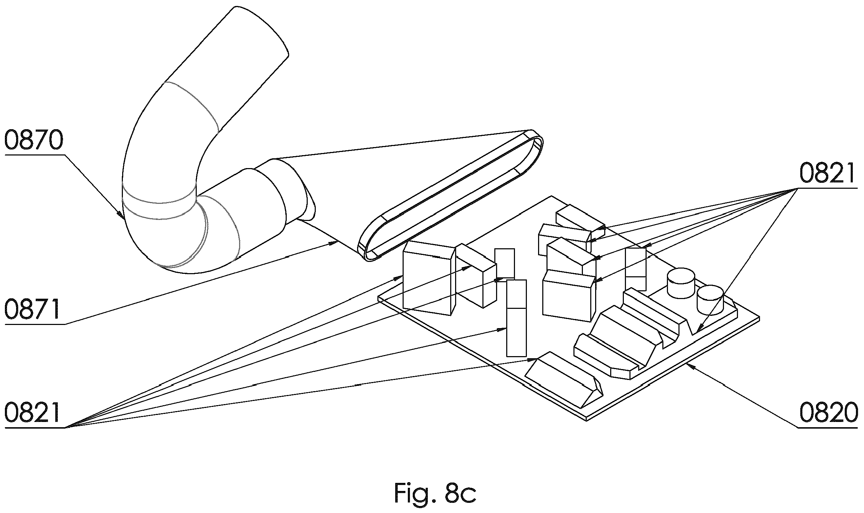

Fig. 8a to Fig. 8c show a schematic representation of a system before the vacuum chambers are applied. A cleaning step with the aid of a vacuum cleaning unit 0870 and a laser unit 0810 can take place. In this step the laser unit 0810 is operated with a lower output power or a non-focused beam or in a pulsed mode in order not to melt the processing surface and to only clean greasy leftovers and/or particles from previous processing steps and remove them off of the processing surfaces with the help of the vacuum cleaning unit 0870. The vacuum cleaning unit 0870 has a vacuum nozzle 0871 that is aimed at the product 0820 and in close proximity to the product so that in the suction operation it can be ensured that the undesired particles are removed. The laser unit 0810 can also be used to pre-structure the processing surfaces of the product 0820.

The product 0820 comprises several product elements 0821 each of which contains a processing surface of at least one of at least two components to be joined by welding.

Preferably, the depicted devices and components are used for carrying out a method for producing a material composite by means of laser welding, in which a laser unit 0110, 0810 emits laser radiation onto a partial region of a processing surface of at least one of at least two components to be joined by welding, a component melts in an incident region of the laser radiation at least in regions for the purpose of joining the components, and at least one vacuum chamber 0250, 0350, 0450, 0550, 0650, 0750 is connected pressure-tight in a suction process to the processing surface which encloses the partial region on which at least one welding operation is carried out by means of the laser.

For treating a product 0520, 0720, 0820 comprising several product elements 0521, 0721, 0821, each of which contains a processing surface of at least one of at least two components to be joined by welding, it is advantageous if there is a single vacuum chamber 0250, 0350, 0450, 0550, 0650, 0750 on each of these product elements 0521, 0721, 0821.

Advantageously, a plurality of processing surfaces are each connected to individual vacuum chambers, in that the vacuum chambers 0250, 0350, 0450, 0550, 0650, 0750 are connected pressure-tight to a vacuum or a vacuum cleaning unit for the suction process and in order to reduce the pressure in the vacuum chambers 0250, 0350, 0450, 0550, 0650, 0750.When the pressure falls below a predefined pressure value for the welding process, a laser beam with a power sufficient for the welding process is coupled into one vacuum chamber 0250, 0350, 0450, 0550, 0650, 0750 after another and onto the partial regions of the welded joints to be produced. If this minimum pressure level is not reached the laser will not be activated so that the product will not be destroyed or damaged and can be reworked automatically after the root cause for leakage is eliminated. This supports a welding quality of nearly 100%.

Preferable, before the welding process, the processing surfaces are cleaned in a cleaning step with the aid of a continuous wave (CW) welding laser, especially the laser unit described in this application text or a pulsed cleaning laser unit 0110, 0810 and by the vacuum cleaning unit.

Advantageously, during the cleaning step the processing surfaces are pre-structured with the aid of the laser unit 0110, 0810.

Preferable, before the vacuum chambers 0250, 0350, 0450, 0550, 0650, 0750 are brought into pressure-tight connection with the processing surfaces, several of the processing surfaces are cleaned by means of the laser unit 0110, 0810 and jointly by means of the vacuum cleaning unit.

Advantageously, the vacuum cleaning unit or the vacuum are brought into pressure-tight connection with the vacuum chambers 0250, 0350, 0450, 0550, 0650, 0750 in such a way that in a first operating function of the vacuum chambers 0250, 0350, 0450, 0550, 0650, 0750 air is sucked out of the vacuum chambers 0250, 0350, 0450, 0550, 0650, 0750 by a suction operation, so that contamination within the partial region of the processing surface is removed.

Preferable, air flows into the vacuum chamber 0250, 0350, 0450, 0550, 0650, 0750 through a defined leakage and a volume flow is generated so that impurities arising during the welding process are removed by a resulting suction process. This prevents also the contamination of areas located outside the vacuum chambers.

Advantageously, after the welding process, the respective vacuum chamber 0250, 0350, 0450, 0550, 0650, 0750 is specifically brought into pressure-tight connection with a compressed air container in a blow-off step with the aid of a valve, in particular a solenoid valve, and is thus subjected to a pressure pulse, so that the pressure in the chamber becomes equal to the ambient air and the chamber can be detached from the processing surface.

Advantageously, the described system, the advantageous components and the method according to the invention are used for a high-volume production of high-current contacts by means of laser welding in a process line for the production of electrical high-performance components.

### List of reference signs

Fig. 1
   0110: laser unit
   0120: product
   0125: vacuum chamber frame
   0130: product lift
   0135: transport segment
   0140: laser spot area
Fig. 2
   0211: laser beam
   0212: z-position
   0213: y-position
   0214: x-position
   0215 protective glass
   0216: first laser spot
   0217: second laser spot
   0220: product
   0240: laser spot area
   0250: vacuum chamber
Fig. 3a to Fig. 3d
   0315: vacuum chamber window
   0350: vacuum chamber
   0351: silicone sealing
   0352: vacuum chamber body
   0353: vacuum chamber window holder
   0355: high temperature pressure insert
   0360: vacuum connection
   Fig. 4a, Fig. 4b and Fig. 4c
   0450: vacuum chamber
   0451: silicone sealing
   0455: high temperature pressure insert
Fig. 5
   0520: product
   0521: product elements
   0550: vacuum chambers
Fig. 6
   0625: vacuum chamber frame
   0650: vacuum chambers
Fig. 7
   0720: product
   0721: product elements
   0750: vacuum chambers
Fig. 8a to Fig. 8c
   0110, 0810: laser unit
   0820: product
   0821: product elements
   0870: vacuum cleaning unit
   0871: vacuum nozzle

## Claims

1. Method for producing a material composite by means of laser welding, in which a laser unit (0110, 0810) emits laser radiation onto a partial region of a processing surface of at least one of at least two components to be joined by welding, a component melts in an incident region of the laser radiation at least in regions for the purpose of joining the components, and at least one vacuum chamber (0250, 0350, 0450, 0550, 0650, 0750) is connected pressure-tight in a suction process to the processing surface which encloses the partial region on which at least one welding operation is carried out by means of the laser, **characterised in that** a plurality of processing surfaces are each connected to individual vacuum chambers, **in that** the vacuum chambers (0250, 0350, 0450, 0550, 0650, 0750) are connected pressure-tight to a vacuum or a vacuum cleaning unit for the suction process and in order to reduce the pressure in the vacuum chambers (0250, 0350, 0450, 0550, 0650, 0750), and **in that**, when the pressure falls below a predefined pressure value for the welding process, a laser beam with a power sufficient for the welding process is coupled into one vacuum chamber (0250, 0350, 0450, 0550, 0650, 0750) after another and onto the partial regions of the welded joints to be produced.

2. Method according to claim 1, **characterised in that**, before the welding process, the processing surfaces are cleaned in a cleaning step with the aid of the CW laser unit (0110, 0810) or a pulsed cleaning laser and the vacuum cleaning unit.

3. Method according to claim 2, **characterised in that** during the cleaning step the processing surfaces are pre-structured with the aid of the laser unit (0110, 0810).

4. Method according to claim 2 or according to claim 3, **characterised in that,** before the vacuum chambers (0250, 0350, 0450, 0550, 0650, 0750) are brought into pressure-tight connection with the processing surfaces, several of the processing surfaces are cleaned by means of the laser unit (0110, 0810) and jointly by means of the vacuum cleaning unit.

5. Method according to any of the preceding claims, **characterised in that** air flows into the vacuum chamber (0250, 0350, 0450, 0550, 0650, 0750) through a defined leakage and a volume flow is generated so that impurities arising during the welding process are removed by a resulting suction process.

6. Method according to one of the previous claims, **characterised in that,** after the welding process, the respective vacuum chamber (0250, 0350, 0450, 0550, 0650, 0750) is specifically brought into pressure-tight connection with a compressed air container in a blow-off step with the aid of a valve, in particular a solenoid valve, and is thus subjected to an air pressure pulse, so that the pressure in the chamber tailors to the environment becomes equal to the ambient air and the chamber can be detached from the processing surface.

7. Method according to one of the preceding claims, **characterised in that** it is used for high-volume production of high-current contacts by means of laser welding in a process line for the production of electrical high-performance components.

8. System with a laser unit (0110, 0810) which is designed in such a way that it can emit laser radiation and project the laser beam onto a partial region of a processing surface of at least one of at least two components to be joined by welding and melt it at least in regions, so that at least one welding process can be carried out by means of the laser, for use in a process for producing a material composite by means of laser welding, in particular in a process according to one of claims 1 to 8, **characterized in that** it contains a plurality of vacuum chambers (0250, 0350, 0450, 0550, 0650, 0750) which each have the following components:
a. a sealing body,
b. a supply line with at least one connection to a vacuum reservoir,
c. a high temperature pressure insert,
d. a coupling window that can be turned towards the laser unit (0110, 0810), which covers and seals the vacuum chamber.

9. System according to claim 8, **characterised in that** the vacuum chambers (0250, 0350, 0450, 0550, 0650, 0750) can be connected pressure-tight in a first operating function by means of a valve to a vacuum cleaning unit and can be connected pressure-tight in a second operating function to the vacuum reservoir, and wherein at least one switching unit is present which can switch between the operating functions.

10. System according to any one of claims 8 or 9, **characterised in that** the high temperature pressure insert is formed from a material having a higher degree of hardness than the sealing body and is capable of acting mechanically on the materials to be welded together so as to bring them more into contact with each other and is capable of producing a direct thermal connection between the materials.

11. System according to any one of claims 8 to 10, **characterised in that** the coupling windows are removably recessed in the vacuum chamber (0250, 0350, 0450, 0550, 0650, 0750)in such a way that they can each be withdrawn from a slot recessed in the side of the housing for replacement as required at a suitable time and be exchanged.

12. System according to any one of claims 8 to 11, **characterised in that** the laser unit (0110, 0810) is equipped with a three-axis galvanometer and/or a mirror arrangement and/or optical collimation devices so that the laser beam coupled into the respective vacuum chamber (0250, 0350, 0450, 0550, 0650, 0750) for the welding process can be adapted to the positions and heights of the partial product areas.

13. A system according to claim 12, **characterised in that** the system further comprises a frame (0625) in which a plurality of vacuum chambers (0250, 0350, 0450, 0550, 0650, 0750) are located at predefined positions, and **in that** the laser unit (0110, 0810) couples its laser beam into a plurality of vacuum chambers (0250, 0350, 0450, 0550, 0650, 0750) located in the frame one by one, and **in that** the plurality of vacuum chambers (0250, 0350, 0450, 0550, 0650, 0750) prevent contamination of areas located outside the vacuum chambers (0250, 0350, 0450, 0550, 0650, 0750).

14. Use of a system according to any one of claims 8 to 13 for high-volume production of high-current contacts by means of laser welding in a process line for manufacturing electrical high-performance components.

15. Use according to claim 14 in a method for producing material composites by means of laser welding, in particular in a method for producing electrical contacts of a battery or a fuel cell or for connecting elements of a battery or a fuel cell, **characterised in that** the frame is applied to the battery or the fuel cell and the vacuum chambers (0250, 0350, 0450, 0550, 0650, 0750) are provided at positions for producing the electrical contacts by welding connections of components of the battery or the fuel cell and/or at positions for welding connections of elements of the battery or the fuel cell.
